# EUROPÄISCHE PATENTSCHRIFT

(11) **EP 2 462 190 B1**
(45) Veröffentlichungstag und Bekanntmachung des Hinweises auf die Patenterteilung: **12.04.2017**
(21) Anmeldenummer: 10739519.6
(22) Anmeldetag: 22.07.2010
(51) Int. Cl.: C08K 7/22, C09D 163/00

(54) **BESCHICHTETER FESTIGKEITSTRÄGER**
COATED REINFORCEMENT
SUPPORT DE RENFORCEMENT REVÊTU

(30) Priorität: 05.08.2009 DE 102009036120
(43) Veröffentlichungstag der Anmeldung: 13.06.2012
(73) Patentinhaber: Hexion GmbH, 58642 Iserlohn-Letmathe (DE)
(72) Erfinder: REICHWEIN, Heinz-Gunter, 47475 Kamp-Lintfort (DE); HASSON, Tareq, 40885 Ratingen (DE); EWALD, Dirk, 45721 Haltern am See (DE)
(86) Internationale Anmeldenummer: PCT/EP2010/004483
(87) Internationale Veröffentlichungsnummer: WO 2011/015288

(56) Entgegenhaltungen:
- WO-A2-2007/130979
- JP-A- 2006 274 211
- DATABASE CA [Online] CHEMICAL ABSTRACTS SERVICE, COLUMBUS, OHIO, US; 2007, YANAGISAWA, TAKASHI ET AL: "Prepregs with high compressive strength, their manufacture, and carbon fibers and fiber bodies for them", XP002610533, gefunden im STN Database accession no. 2007:326971 & JP 2007 070593 A (GSI CREOS CORPORATION, JAPAN; ARISAWA MFG CO., LTD.) 22. März 2007 (2007-03-22)
- TOMOHIRO YOKOZEKI ET ALJ: "MECHANICAL PROPS OF CFRP LAMINATES MANUFACTURED FROM UNIDIRECTIONAL PREPREGS USING CSNT DISPERSED EPOXY", COMPOSITES PART A, Bd. 38, 2007, Seiten 2121-2130, XP002609698,
- TOSHIO OGASAWARA: "CHARACTERISATION OF MULTI-WLLED CARBON NANOTUBE/PHENYLETHYNL TERMINATED POLYIMIDE COMPOSITES", COMPOSITES: PART A APPLIED SCIENCE AND MANUFACTURING, Bd. 25, 2004, Seiten 67-74, XP002609699,

## Beschreibung

Die Erfindung betrifft einen beschichteten Festigkeitsträger und dessen Verwendung.

Wenn Festigkeitsträger mit einem Harz beschichtet werden sollen, müssen verschiedene Anforderungen an den Festigkeitsträger und an das Harz berücksichtigt werden. Erhalten werden soll ein Produkt, dass letztendlich eine für die konkrete Anwendung ausreichend mechanische Beständigkeit aufweist. Weiterhin soll sich der Festigkeitsträger unkompliziert und mit möglichst wenig Zeitaufwand beschichten lassen. Allerdings sind den herkömmlichen Methoden zur Beschichtung von Festigkeitsträgern Schranken gesetzt, da durch die Beschaffenheit der Mischung und durch die Mischungszusammensetzung verarbeitungstechnische Grenzen vorgegeben sind.

In herkömmlicher Art und Weise können Festigkeitsträger, in der Handlaminiertechnik, in der Prepreg-Technologie oder aber auch mittels Infusionstechnik, beschichtet werden. Für die Beschichtung von Festigkeitsträgern mittels Infusionstechnik können nur Harzmischungen mit entsprechenden Eigenschaften, die einerseits die Durchführung des Verfahrens überhaupt ermöglichen (einfache Injizierbarkeit, Viskosität) und andererseits zu Produkten mit gewünschten mechanischen oder chemischen Eigenschaften führen, verwendet werden. So sind Harzmischungen auf der Basis von Polyestern, Vinylestern und Epoxiden gebräuchlich.

Werden herkömmliche Harzmischungen z.B. auf Basis von Epoxiden für das Infusionsverfahren verwendet, so sind sie zwar einfach zu injizieren, verleihen dem Endprodukt im allgemeinen aber eine unzureichende Schlägzähigkeit und Schadenstoleranz gegenüber Stoßeinflüssen, was für viele Anwendungen allerdings erforderlich ist.

Zur Verbesserung der Schlagzähigkeit von Harzen ist es u. a. bekannt, pulverförmige weiche Füllstoffe, wie z. B. Gummimehl in die Infusionsharzmischungen einzumischen. In der EP 1375591 B1 wird die Verwendung von vernetzbaren Elastomerpartikeln auf der Basis von Polyorganosiloxanen für Harzmischungen beschrieben, die im RTM-Verfahren verarbeitbar sind. Allerdings wird mit einer solchen Maßnahme die mechanischen Eigenschaften noch nicht ausreichend verbessert. Außerdem führte die Verwendung von festen Partikeln im Infusionsverfahren bisher dazu, dass die festen Teilchen nicht das Fasergut durchdringen konnten. Die Folge davon war, dass das Fasergut nicht mit einer homogenen Harzmischung beschichtet werden konnte, was sich negativ auf die Eigenschaften, insbesondere auf die mechanischen Eigenschaften, des Endproduktes auswirkte.

Weiterhin ist bekannt, dass die Eigenschaften von duroplastischen Harzen durch Kohlenstoffnanoröhren (Carbon nano tubes) positiv beeinflusst werden können. So können die Leitfähigkeit oder auch die mechanischen Eigenschaften wie Schlagzähigkeit oder Bruchdehnung von mit Kohlenstoffnanoröhren gefüllten duroplastischen Harzen verbessert werden (z.B. WO 2007/011313 oder Li Dan; Zhang, Xianfeng et al: Toughness improvement of epoxy by incorporating carbon nano tubes into the resin, Journal of Materials Science Letters (2003), 22(11), 791-793. ISSN:0261-8028). Die Eigenschaften und die Herstellung der Kohlenstoffnanoröhren sind aus dem Stand der Technik (z.B.: Wissenschaftliche Zeitschrift der Technischen Universität Dresden, 56 (2007) Heft 1-2, Nanowelt) ebenfalls bekannt. Es handelt sich hierbei um mikroskopisch kleine röhrenförmige Gebilde aus Kohlenstoff. So gibt es ein- oder mehrwandige, offene oder geschlossene oder gefüllte Kohlenstoffnanoröhren. Der Durchmesser der Nanoröhren liegt zwischen 0,2 und 50 nm und die Länge variiert von wenigen Millimetern bis zu derzeit 20 cm. WO-A-2007/130979 offenbart ein Verfahren zur Herstellung von nanoverstärkten Kohlenfasern.

Werden allerdings solche Kohlenstoffnanoröhren für Zusammensetzungen zur Herstellung von faserverstärkten Produkten, insbesondere im Infusionsverfahren verwendet, traten die gleichen Schwierigkeiten auf, die bisher auch bei der Verwendung von anderen festen Partikeln in der Harzmischung auftraten (Nichtdurchdringung des Fasergutes und damit inhomogene Beschichtung). Die Kohlenstoffnanoröhren konnten somit ihre Eigenschaften bei der Verwendung von faserverstärkten Produkten, die zumindest im Infusionsverfahren hergestellt wurden, nicht entfalten.

Aufgabe der hier vorliegenden Erfindung ist es nunmehr, beschichtete Festigkeitsträger bereitzustellen, deren Beschichtung es letztendlich ermöglicht, ein faserverstärktes Produkt, insbesondere im Infusionsverfahren zur Verfügung zu stellen, das hervorragende mechanische Eigenschaften besitzt.

Gelöst wird diese Aufgabe dadurch, dass die Oberfläche der Festigkeitsträger eine Beschichtung aus einer Zusammensetzung aufweist, die aus einem Festharz und Kohlenstoffnanoröhren besteht und diese Zusammensetzung einer Wärmebehandlung oberhalb der Schmelztemperatur oder der Erweichungsbereiches und unterhalb der Vemetzungstemperatur des gegebenenfalls selbstvernetzenden Festharzes unterzogen wurde, wodurch die Zusammensetzung auf der Oberfläche des Festigkeitsträgers fixiert ist.

Der erfindungsgemäße Festigkeitsträger wird mit einer Mischung aus Festharz und Kohlenstoffnanoröhren (carbon nanotubes) beschichtet.
Das Festharz kann z.B. ausgewählt sein aus Phenolharzen (Novolake, Resole), Polyurethane, Polyolefine, wobei besonders bevorzugt Epoxidharze, Phenoxyharze, Vinylesterharze, Polyesterharze, Cyanatesterharze, Bismaleiimdharze, Benzoxazinharze und/oder Mischungen hieraus. Es können aber noch andere aus dem Stand der Technik bekannten Festharze verwendet werden. Die Glasübergangtemperatur (Schmelztemperatur) beträgt bevorzugt T_{G} > 50 °C. Der T_{G}-Wert wird für vorrangig duroplastische Materialien angegeben. Handelt es sich bei den Festharzen um vorrangig thermoplastische Materialien soll der Erweichungsbereich bevorzugt (T_{M}) > 50 °C betragen. Die Verwendung von Harzen mit einem T_{G}-Wert/ T_{M} < 50 °C ist für die erfindungsgemäße Beschichtung von Festigkeitsträgern unter Umständen weniger geeignet, da das Harz je nach Art immer niedrig viskoser wird, somit den Festigkeitsträger durchdringen würde und die festen Partikel (Kohlenstoffnanoröhren) der Zusammensetzung auf der Oberfläche des Festigkeitsträgers verbleiben würden. Eine homogene Oberflächenbeschichtung des Festigkeitsträgers wäre somit nicht gewährleistet.
Die Verwendung von den bevorzugten Festharzen Epoxidharze, Phenoxyharze, Vinylesterharze, Polyesterharze, Cyanatesterharze, Bismaleiimdharze, Benzoxazinharze und/oder Mischungen hieraus hat den Vorteil, dass diese Festharze eine besondere thermische und mechanische Stabilität sowie eine gute Kriechbeständigkeit besitzen.

Besonders bevorzugt ist, wenn die Zusammensetzung zumindest ein Harz ausgewählt aus der Gruppe der Polyepoxide auf der Basis von Bisphenol A und/oder F und daraus hergestellte Advancementharze, auf der Basis von epoxidierten halogenierten Bisphenole und/oder epoxidierten Novolake und/oder Polyepoxidester auf der Basis von Phthalsäure, Hexahydrophthalsäure oder auf der Basis von Terephthalsäure, epoxidierte o- oder p-Aminophenole, epoxidierte Polyadditionsprodukte aus Dicyclopentadien und Phenol enthält. So werden als Harzkomponente epoxidierte Phenolnovolake (Kondensationsprodukt aus Phenol und z. B. Formaldehyd und/oder Glyoxal), epoxidierte Kresolnovolake, Polyepoxide auf der Basis von Bisphenol-A (z. B. auch Produkt aus Bisphenol A und Tetraglycidylmethylendiamin), epoxidierte halogenierte Bisphenole (z. B. Polyepoxide auf der Basis von Tetrabrombisphenol-A) und/oder Polyepoxide auf der Basis von Bisphenol-F und/oder epoxidierter Novolak und/oder Epoxidharze auf der Basis von Triglycidylisocyanurate verwendet.

Das mittlere Molekulargewicht all dieser Harze ist ≥ 600 g/mol, da es sich dann um Festharze handelt, die bevorzugt aufstreubar sind. Hierzu zählen u.a.:
Epikote® 1001, Epikote® 1004, Epikote® 1007, Epikote® 1009: Polyepoxide auf Basis von Bisphenol A,
Epon® SU8 (epoxidierter Bisphenol-A Novolak), Epon® 1031 (epoxidierter Glyoxal-Phenol Novolak), Epon® 1163 (Polyepoxid auf Basis Tetrabrombisphenol-A), Epikote® 03243/LV (Polyepoxid auf Basis von (3,4-Epoxycyclohexyl)methyl 3,4-epoxycyclohexylcarboxylate und Bisphenol-A), Epon® 164 (epoxidierter o-Kresolnovolak) - alle Produkte erhältlich bei Hexion Specialty Chemicals Inc.
Der Vorteil dieser verwendeten Festharze ist, dass diese bei Raumtemperatur mahlbar und lagerfähig. Sie sind bei moderaten Temperaturen schmelzbar. Sie verleihen dem Festigkeitsträger eine gute mechanische Beständigkeit. Darüber hinaus sind sie kompatibel mit andern z.B. bei der Herstellung vom faserverstärkten Produkt verwendeten Harzen.
Auch haben Epoxidharze z.B. im Vergleich zu Polyestern und Vinylestern den besonderen Vorteil, dass sie geringe Schwindungswerte aufweisen, was generell einen positiven Einfluss auf die mechanischen Kenndaten des Endproduktes hat.

Zur Herstellung der erfindungsgemäßen beschichteten Festigkeitsträger können verschiedenste Kohlenstoffnanoröhren verwendet werden, wobei die Struktur der Kohlenstoffnanoröhren der Struktur des Festharzes angepasst sein sollte, um eine möglichst einfach herzustellende Mischung zu erhalten.
Generell kann eine Mischung aus Festharz und Kohlenstoffnanoröhren durch Herstellung einer Vormischung in einem Standardrührwerk und anschließende Homogenisierung im Ultraschallbad erhalten werden. Entsprechende Verfahren sind z.B. in Koshio, A. Yudasaka, M. Zhang, M. lijima, S. (2001): A simple way to chemically react single wall carbon nanotubes with organic materials using ultrasonication; in nano letters , Vol. 1, No. 7, 2001, p. 361-363, American Chemical Society (Datenbank CAPLUS: AN 2001:408691) oder Paredes, J. I. Burghard, M. (2004):Dispersions of individual single walled carbon nanotubes of high length in : Langmuir, Vol. 20, No.12, 2004, 5149-5152, American Chemical Society (Datenbank CAPLUS: AN 2004:380332).
Auch ist es möglich durch Aufschmelzen der Festharze, dispergieren der Kohlenstoffnanoröhren und anschließendem Extrudieren die Kohlenstoffnanoröhren in das Festharz einzubinden.

In der Mischung sind die Kohlenstoffnanoröhren in einer Konzentration von 0,2 bis 30 Gew.% bezogen auf das Gewicht des Festharzes in der Zusammensetzung enthalten. Bei Konzentrationen < 0,2 Gew% wird kein ausreichender Effekt erzielt, bei Konzentrationen > 30 Gew.% werden verarbeitungstechnische Nachteile hinsichtlich der Homogenität der Zusammensetzung erwartet, was letztendlich zu Einbußen bei den mechanischen Eigenschaften des faserverstärkten Produktes führen könnte. Besonders bevorzugt ist ein Bereich zwischen 0,2 und 5 Gew.% an Kohlenstoffnanoröhren, da die Herstellung der Zusammensetzung aufgrund der z.B. geringen Einbringung von Scherkräften einhergehen kann.

Weiterhin ist es möglich, dass die Zusammensetzung der Beschichtung ein Festharz Kohlenstoffnanoröhren und weitere Zusatzstoffe enthält und diese Zusammensetzung einer Wärmebehandlung oberhalb der Schmelztemperatur oder der Erweichungsbereiches des Festharzes und unterhalb der Vemetzungstemperatur der gegebenenfalls vernetzenden Zusammensetzung unterzogen wurde, wobei die Zusammensetzung auf der Oberfläche des Festigkeitsträgers fixiert ist.

Wenn die Zusammensetzung einen Härter (Vernetzungsmittel) als weiteren Zusatzstoff enthält, was zu einer vorteilhaften Verringerung der Temperatur der erforderlichen Wärmebehandlung führt, kann dies einer für das entsprechende Harz aus dem Stand der Technik bekannter sein.

Für Epoxidharze kommen z.B. als Härter Phenole, Imidazole, Thiole, Imidazolkomplexe, Carbonsäuren, Bortrihalogenide, Novolake, Melamin-Formaldehyd-Harze in Betracht. Besonders bevorzugt sind Anhydridhärter vorzugsweise Dicarbonsäureanhydride und Tetracarbonsäureanhydride bzw. deren Modifizierungen. Als Beispiele seien an dieser Stelle folgende Anhydride genannt: Tetra-hydrophthalsäure-anhydrid (THPA), Hexahydrophthalsäure-anhydrid (HHPA), Methyl-tetra-hydrophthalsäure-anhydrid (MTHPA), Methylhexa-hydrophthalsäure-anhydrid (MHHPA), Methyl-nadic-anhydrid (MNA), Dodezenylbernsteinsäure-anhydrid (DBA) oder Gemische hiervon. Als modifizierte Dicarbonsäureanhydride kommen saure Ester (Reaktionsprodukte aus oben genannten Anhydriden oder deren Gemische mit Diolen oder Polyolen z.B.: Neopentylglykol (NPG), Polypropylenglykol (PPG, bevorzugt Molekulargewicht 200 bis 1000) zum Einsatz. Durch gezielte Modifizierung lässt sich ein weiter Bereich der Glasübergangstemperatur (zwischen 30 und 200 °C) einstellen. Weiterhin können die Härter ausgewählt sein aus der Gruppe der Aminhärter, wiederum hiervon ausgewählt aus den Polyaminen (aliphatisch, cyloaliphatisch oder aromatisch), Polyamiden, Mannich Basen, Polyaminoimidazolin, Polyetheraminen und Mischungen hieraus. Beispielhaft sei an dieser Stelle die Polyetheramine, z. B. Jeffamine D230, D400 (Fa. Huntsman) genannt, bei deren Einsatz die Härtung durch eine geringe Exothermie auszeichnet. Die Polyamine z. B. Isophorondiamin verleihen der Zusammensetzung einen hohen T_{G}-Wert und die Mannich Basen, z.B. Epikure 110 (Hexion Specialty Chemicals Inc.) zeichnen sich durch eine geringe Carbamat Bildung und eine hohe Reaktivität aus.

Als weiteren Zusatzstoff kann die Zusammensetzung eine die Vernetzung beschleunigende Komponente enthalten. Prinzipiell sind alle aus dem Stand der Technik bekannten Beschleuniger, die für entsprechenden Harze verwendet werden können, geeignet. Beispielhaft seien hier Beschleuniger für Epoxidharze genannt, nämlich z. B. Imidazole, substituierte Imidazole, Imidazoladdukte, Imidazolkomplexe (z. B. Ni-Imidazolkomplex), tertiäre Amine, quaternäre Ammonium- und/oder Phosphoniumverbindungen, Zinn(IV)chlorid, Dicyandiamid, Salicylsäure, Harnstoff, Harnstoffderivate, Bortrifluridkomplexe, Bortrichloridkomplexe, Epoxiadditions-Reaktionsprodukte, Tetraphenylenborkomplexe, Aminborate, Amintitanate, Metallacetylacetonate, Naphthensäuremetallsalze, Octansäuremetallsalze, Zinnoctoate, weitere Metallsalze und/oder Metallchelate, zum Einsatz. Beispielhaft sei an dieser Stelle weiterhin genannt: oligomere Polyethylenpiperazine, Dimethylaminopropyldipropanolamin, Bis-(dimethylaminopropyl)-amino-2-propanol, N,N'-Bis-(3-dimethylaminopropyl)urea, Mischungen aus N-(2-hydroxypropyl)imidazol, Dimethyl-2-(2-aminoethoxy)ethanol und Mischungen hiervon, Bis (2-dimethylaminoethyl)ether, Pentamethyldiethylentriamin, Dimorpholinodiethylether, 1,8 Diazabicyclo[5.4.0]undecen-7, N-Methylimidazol, 1,2 Dimethylimidazol, Triethylendiamin, 1,1,3,3-Tetramethylguanidin.

Weiterhin kann die Zusammensetzung weitere Zusatzstoffe wie z.B. Graphitpulver, Siloxane, Pigmente, Metalle (z. B. Aluminium, Eisen oder Kupfer) in Pulverform, bevorzugt Korngröße < 100 µm oder Metalloxide (z. B. Eisenoxid), Reaktiwerdünner (z. B. Glycidylether auf Basis von Fettalkoholen, Butandiol, Hexandiol, Polyglykole, Ethylhexanol, Neopentylglykol, Glycerin, Trimethylolpropan, Rizinusöl, Phenol, Kresol, p-tert. Butylphenol), UV-Schutzmittel oder Verarbeitungshilfsmittel enthalten. Diese Zusatzstoffe werden bezogen auf das Festharz in einer üblichen Konzentration von 1 bis 20 Gew.% bezogen auf das Gewicht des Harzes zugegeben. Die Verwendung von Graphit, Metallen oder Metalloxiden ermöglichen aufgrund ihrer Leitfähigkeit die induktive Erwärmung der entsprechenden Mischung, wodurch eine signifikante Verkürzung der Härtungszeit bewirkt wird. Siloxane haben einen Einfluss auf eine verbesserte Imprägnierung und Faseranbindung, die letztendlich zu einer Verringerung der Fehlstellen im Verbund führen. Außerdem wirken Siloxane beschleunigend im Infusionsprozess. Zusammenfassend kann ausgeführt werden, dass diese Zusatzstoffe als Verarbeitungshilfsmittel bzw. zum Stabilisieren der Mischungen oder als Farbgeber dienen.

Die Zusatzstoffe ergeben zusammen mit den oben aufgeführten Festharzen und den Kohlenstoffnanoröhren feste bevorzugt riesel- bzw. streufähige Gemische die bei Raumtemperatur über ein hinreichende bis herausragende Lagerstabilität verfügen.

Die Festigkeitsträger können ausgewählt sein aus Glas, Keramik, Bor, Kohle, Basalt, synthetischen und/oder natürlichen Polymeren und in form von Fasern (z.B. kurze Fasern oder Endlosfasern), Gelegen, Vliesen, Gewirken, Wirrfasermatten und/oder Geweben eingesetzt werden.

Die Zusammensetzung zur Beschichtung der Festigkeitsträger kann in herkömmlicher Art und Weise z. B. in Form von Streuen, Sprühen, Streichen, Rakeln oder mittels Infusionstechnik aufgebracht werden. Die Aufbringung durch Streuen ist bevorzugt, da das Material bereits an sich bevorzugt ein Pulver ist und somit unkompliziert verwendet werden kann. Entsprechend des verwendeten Festharzes bzw. Festharz/Zusatzstoff-Gemisches wird die Temperatur (bevorzugt ca. 50-150°C) der Wärmebehandlung so gewählt, dass auf der Oberfläche des Festigkeitsträgers ein Film der aufgeschmolzenen Zusammensetzung verbleibt. Bei Verwendung von duroplastischen Materialien liegen diese noch in einem unvernetzten Zustand vor, da die Temperatur der Wärmebehandlung unterhalb der Vemetzungstemperatur (Härtungstemperatur) gewählt wird. Wird die Wärmebehandlung bei oder oberhalb der Vemetzungstemperatur des Festharzes durchgeführt ist dieses nicht mehr im ausreichendem Maße in der Lage mit weiteren Harzen, die z.B für die Herstellung eines faserverstärkten Produktes erforderlich sind, eine chemische Reaktion einzugehen und die Anbindung wäre geschwächt. Die Wärmebehandlung kann z. B. in einem Durchlaufofen durchgeführt werden. Vorzugsweise erfolgt die Wärmebehandlung in der Kavität des sich direkt anschließenden Infusionsverfahrens, wodurch die Herstellzeit eines den beschichteten Festigkeitsträger enthaltenden Bauteils wesentlich verringert wird.

Die Zusammensetzung ist lagerstabil, kann demnach vorgemischt und je nach Bedarf eingesetzt werden. Ein weiterer Vorteil besteht darin, dass auch der beschichtete Festigkeitsträger lagerstabil ist, so dass dieser vorgefertigt zur weiteren Produktionsstätte geliefert werden kann. Der beschichtete Festigkeitsträger wird gegebenenfalls nach Lagerung platzsparend aufgerollt bzw. vorgeformt bzw. transportiert. Darüber hinaus erhöht die Beschichtung die Drapierfähigkeit und verbessert das Zuschneiden des Festigkeitsträgers.

Der erfindungsgemäß beschichtete Festigkeitsträger für die Herstellung von Produkten für industrielle Anwendungen (z.B. Rohre), zur Herstellung von Rotorblättern für Windkraftanlagen, in der Luft- und Fahrzeugtechnik, im Automobilbau, für Sportartikel und im Bootsbau.

Der erfindungsgemäß beschichtete Festigkeitsträger ist für ein Verfahren zur Herstellung eines faserverstärkten Produktes folgende Schritte enthaltend:
a) Herstellung eines beschichteten Festigkeitsträgers nach zumindest einem der Ansprüche 1 bis 8 und gegebenenfalls Vorformung in einer oder mehreren Schichten des beschichteten Festigkeitsträgers
b) Kontaktieren des beschichteten Festigkeitsträgers mit einem bei Verarbeitungstemperaturen flüssigen Harzes und
c) Aushärtung des Verbundes bei gegebenenfalls erhöhter Temperatur unter Druck oder Vakuum
geeignet.

Es ist möglich, dass verarbeitbare flüssige Harz mittels Streichen, Sprühen, Rakeln oder ähnlichen Verfahren aufzubringen.
Besonders bevorzugt sind allerdings Verfahren, bei dem das verarbeitbare flüssige Harz mittels Infusionsverfahren mit dem beschichteten Festigkeitsträger in Kontakt gebracht wird. Hierbei werden die beschichteten Festigkeitsträger in der Regel so vorgeformt, dass sie direkt in die Kavität des Werkzeuges eingelegt werden können. Die Vorformung der beschichteten Festigkeitsträger hat den Vorteil, dass sich diese noch besser verformen lassen als in einem späteren Zustand. Anschließend wir das Harz im niedrigviskosen Zustand in das Werkzeug injiziert. Es gibt eine Vielzahl verschiedener Harzinjektionsverfahren die unter dem Begriff Liquid Composite Moulding (LCM) zusammengefasst werden. Hierzu zählt u. a. auch das SRIM (Structural Reaction Injection Moulding)-Verfahren bei dem das Harz unter hohem Druck (> 20 bar) in die Kavität gespritzt wird. Diese Verfahren ist allerdings nur für Produkte geeignet, die einen niedrigen Faseranteil aufweisen, weil der Harzstrom die Fasern aus den Angussbereich wegdrückt.

Bei dem RTM-Verfahren wird das im Wesentlichen trockene Fasergut (z. B. Glas-, Kohlenstoff oder Aramidfaser) in Form von Gewebe, Geflechte, Gelege, Wirrfasermatten oder Vliesen in die Form eingelegt. Bevorzugt ist die Verwendung von Kohle- und Glasfasern.

Es erfolgt ein Preformen des Fasergutes, was im einfachsten Fall einem Vorpressen des mit der erfindungsgemäßen Oberflächenbeschichtung versehenden Fasergutes entspricht, um dieses lagerstabil in Form zu halten. Vor dem Einlegen des Fasergutes wird die Form mit Antihaftmitteln (Trennmitteln) versehen. Das kann eine feste Teflonschicht oder aber auch vor jeder Bauteilfertigung ein entsprechend aufgetragenes Mittel sein. Die Form wird geschlossen und die niedrigviskose Harzmischung unter üblichen Druck (< 6 bar) in die Form injiziert. Das niedrigviskose Harz hat so die Möglichkeit, langsam durch die Fasern zu fließen, wodurch eine homogene Imprägnierung des Fasermaterial erzielt wird. Wenn anhand eines Steigers der Harzfüllstand in der Form erkannt werden kann, wird die Injektion abgebrochen. Anschließend erfolgt die Aushärtung des Harzes in der Form, was in der Regel durch Beheizen dieser unterstützt wird. Ist die Aushärtung bzw. Vernetzung abgeschlossen, kann das Bauteil entnommen werden z. B. durch Unterstützung von Auswerfersystemen.

Als Vakuuminfusionsverfahren sind generell Verfahren anzusehen bei denen ein Festigkeitsträger in eine beschichtete Form platziert wird und diese durch den Unterschied zwischen Vakuum und Umgebungsdruck durch die Infusion einer flüssigen Matrix befüllt wird. Mittels Vakuum-Abdichtband wird die Folie gegen die Form abgedichtet und das Bauteil anschließend mit Hilfe einer Vakuumpumpe evakuiert. Der Luftdruck presst die eingelegten Teile zusammen und fixiert sie. Das temperierte flüssige Harz wird durch das angelegte Vakuum in das Fasermaterial gesaugt. Durch Aufheizen der Form wird die flüssige Matrixkomponente zur Aushärtung gebracht.

Als Beispiel für ein Vakuuminfusionsverfahren ist das VARI (Vakuum Assisted Resin Infusion-Verfahren) anzusehen, wobei das niedrigviskose Harz mittels Vakuum in die Kavität des Werkzeugs und damit durch das Fasermaterial gezogen wird, wobei Bauteile mit einem sehr geringen Luftgehalt erzeugt werden können. Da bei diesem Verfahren die Kavität nicht allseitig druckfest ausgebildet sein muss, sind die Werkzeugkosten im Vergleich zum RTM-Verfahren geringer, wobei allerdings die Zeit zur Herstellung eines Bauteils beim VARI-Verfahren höher ist. Eine spezielle Variante des VARI-Verfahrens ist der SCRIMP (Seeman Composite Resin Transfer Moulding)-Prozess. Bei diesem Prozess wird das niedrigviskose Harz über ein System von Kanälen, welche in einer Folie enthalten sind, gleichzeitig über eine große Fläche verteilt. Dadurch wird die Imprägnierzeit wesentlich verringert und gleichzeitig Lufteinschlüsse im Bauteil vermieden.

Das bei Verarbeitungstemperatur flüssige Harz hat einen bevorzugten T_{G} bzw. T_{M} < 20 °C und kann bevorzugt ausgewählt sein aus der Gruppe der Epoxidharze, Phenoxyharze, Vinylesterharze, Polyesterharze, Cyanatesterharze, Bismaleiimdharze, Benzoxazinharze und/oder Mischungen hieraus. In der Regel können aber alle aus dem Stand der Technik bekannten Infusionsharze verwendet werden.

Besonders bevorzugt ist die Verwendung der Polyepoxide auf der Basis von Bisphenol-A und/oder F, auf der Basis von Tetraglycidylmethylendiamin (TGMDA), auf der Basis von epoxidierten halogenierten Bisphenole (z. B. Tetrabrombisphenol-A) und/oder epoxidiertem Novolak und/oder Polyepoxidester auf der Basis von Phthalsäure, Hexahydrophthalsäure oder auf der Basis von Terephthalsäure, epoxidierte o- oder p-Aminophenole, epoxidierte Polyadditionsprodukte aus Dicyclopentadien und Phenol, Diglycidylether der Bisphenole, insbesondere der Bisphenole A und F und/oder daraus hergestellten Advancementharzen ist und einem Anhydridhärter und/oder Aminhärter enthält und dieser Verbund in der Hitze ausgehärtet wird. Das Epoxidäquivalentgewicht der Harze beträgt vorzugsweise 80 - 450 g. Beispielhaft sei an dieser Stelle auch 2,2 Bis[3,5-dibromo-4-(2,3-epoxypropoxy)phenyl]propan, 2,2-Bis[4-(2,3-epoxypropoxy)cyclohexyl]propan, 4-Epoxyethyl-1,2-epoxycyclohexan oder das 3,4-Epoxycyclohexyl 3,4-epoxycyclohexancarboxylate [2386-87-0] genannt.
Diese Mischungen sind bevorzugt niedrigviskos, um eine einfache Injektion zu gewährleisten.

Außerdem kann das flüssig verarbeitbare Harz weitere übliche Zusatzstoffe, wie bereits bei den Festharzen beschrieben, enthalten. Es ist bevorzugt, wenn die Festharze als auch die flüssigen Harze auf derselben chemischen Basis beruhen, weil dann die Kompatibilität der beiden Harze besonders gut ist und evtl. auftretende Haftungsprobleme ausgeschlossen werden können.

Der Verbund bei dessen Herstellung der erfindungsgemäß beschichtete Festigkeitsträger verwendet wird, wird in der Hitze bei ca. 40 - 200 °C ausgehärtet, bevorzugt 80-140 °C, entsprechend angepasst den verwendeten Harzen und eingesetzten Verfahren.

Anhand eines Ausführungsbeispiels soll die Erfindung näher erläutert werden.
a) Herstellung der Zusammensetzung der Mischung zur Beschichtung des Festigkeitsträgers
   Mischung Harz/Nanotubes :
   20 g eines Epoxid-Fest- Harzes (Epikote® 1004 - Produkt erhältlich bei Hexion Specialty Chemicals Inc.) werden in einem beheizbaren Behältnis bei 120 °C aufgeschmolzen und es werden 0,2 g VIW CNT (BAYTUBES - BAYER Material Science) zugegeben und mechanisch mit einem Labormischer vermischt. Die homogene Dispersion der Matrix erfolgt mit Hilfe eines Ultrax. Die Matrix (Epoxy-MWCNT) wird abgekühlt und mit Hilfe einer Labormühle fein vermahlen.
   Dieses Gemisch wird auf ein Glasfilamentgewebe aufgestreut und bei ca. 80 bis 120 °C einer Wärmebehandlung unterzogen, so dass das Gemisch durch Aufschmelzen des Festharzes auf der Oberfläche des Gewebes fixiert ist.
b) Herstellung des Produktes im Harzinfusionsverfahren

450 g des beschriebenen beschichteten Glasfilamtgewebes werden mit 550 g (39,3 mg/cm²) (Epikote® 03957 - Gemisch aus Bisphenol-A-diglycidylether und Hexahydrophthalsäureanhydrid; Produkt erhältlich bei Hexion Specialty Chemicals Inc.) mittels herkömmlicher Infusionstechnik imprägniert:
Hierzu wird das trockene Glasfilamentgewebe in eine mit Trennmittel beschichtete Glasplatte gelegt. Das Gewebe wird mit einem Trenngewebe bzw. Folie bedeckt, was das gleichmäßige Fließen der flüssigen Harzmischung erleichtert. Zusätzlich wird eine Membran auf das Faserpaket aufgelegt. Durch Anbringung eines Abdichtbandes wird die Folie gegen die Glasplatte abgedichtet, so dass mittels einer Vakuumpumpe (Drehschieberpumpe) das Gewebe evakuiert wird. An einer Seite des Vakuumaufbaus wird nun mittels eines Schlauchs ein Behältnis mit der beschriebenen flüssigen Harzmischung angeschlossen. Anschließend wird diese durch den anliegenden Unterdruck in das Gewebe gedrückt. Nachdem das Gewebe vollständig mit der flüssigen Harzmischung durchtränkt ist, wird der Verbund durch Wärmezufuhr (8 Stunden bei 80 °C im Ofen) gehärtet.

Das angegebene Ausführungsbeispiel ist im Labormaßstab durchgeführt und wurde durch großtechnische Versuche bestätigt.

Erhalten wird ein faserverstärktes Produkt, das im Infusionsverfahren hergestellt wurde, und verbesserte Eigenschaften hinsichtlich Querzugfestigkeit und Bruchzähigkeit besitzt.

## Patentansprüche

1. Festigkeitsträger dessen Oberfläche eine Beschichtung aus einer Zusammensetzung aufweist, **dadurch gekennzeichnet, dass** die Zusammensetzung aus einem Festharz und Kohlenstoffnanoröhren besteht und diese Zusammensetzung einer Wärmebehandlung oberhalb der Schmelztemperatur oder der Erweichungsbereiches und unterhalb der Vernetzungstemperatur des gegebenenfalls selbstvernetzenden Festharzes unterzogen wurde, wodurch die Zusammensetzung auf der Oberfläche des Festigkeitsträgers fixiert ist.

2. Festigkeitsträger dessen Oberfläche eine Beschichtung aus einer Zusammensetzung aufweist, **dadurch gekennzeichnet, dass** die Zusammensetzung ein Festharz mit einem TM oder TG > 50 °C, Kohlenstoffnanoröhren und weitere Zusatzstoffe enthält und diese Zusammensetzung einer Wärmebehandlung oberhalb der Schmelztemperatur oder der Erweichungsbereiches des Festharzes und unterhalb der Vernetzungstemperatur der gegebenenfalls vernetzenden Zusammensetzung unterzogen wurde, wobei die Zusammensetzung auf der Oberfläche des Festigkeitsträgers fixiert ist.

3. Festigkeitsträger nach Anspruch 1 oder 2, **dadurch gekennzeichnet, dass** das Festharz ausgewählt ist aus Epoxidharzen, Phenoxyharzen, Vinylesterharzen, Polyesterharzen, Cyanatesterharzen, Bismaleiimdharzen, Benzoxazinharzen und/oder Mischungen hieraus.

4. Festigkeitsträger nach Anspruch 3, **dadurch gekennzeichnet, dass** die Zusammensetzung zumindest ein Harz ausgewählt aus der Gruppe der Polyepoxide auf der Basis von Bisphenol A und/oder F und daraus hergestellte Advancementharze, auf der Basis von epoxidierten halogenierten Bisphenole und/oder epoxidierten Novolake und/oder Polyepoxidester auf der Basis von Phthalsäure, Hexahydrophthalsäure oder auf der Basis von Terephthalsäure, epoxidierte o- oder p-Aminophenole, epoxidierte Polyadditionsprodukte aus Dicyclopentadien und Phenol enthält.

5. Festigkeitsträger nach zumindest einem der vorhergehenden Ansprüche, **dadurch gekennzeichnet, dass** die Kohlenstoffnanoröhren in einer Konzentration von 0,2 bis 30 Gew.% bezogen auf das Festharz in der Zusammensetzung enthalten ist.

6. Festigkeitsträger nach Anspruch 2, **dadurch gekennzeichnet, dass** die Zusammensetzung als weitere Zusatzstoffe Graphitpulver, Siloxane, Pigmente, Metalle oder Metalloxide, Reaktiwerdünner, Verarbeitungshilfsmittel und/oder UV-Schutzmittel enthält.

7. Festigkeitsträger nach Anspruch 2, **dadurch gekennzeichnet, dass** die Zusammensetzung als weiteren Zusatzstoff ein Vernetzungsmittel enthält.

8. Festigkeitsträger nach zumindest einem der vorhergehenden Ansprüche, **dadurch gekennzeichnet, dass** der Festigkeitsträger ausgewählt ist aus Fasern, Gelegen, Vliesen, Gewirken, Wirrfasermatten und/oder Geweben.

9. Festigkeitsträger nach zumindest einem der vorhergehenden Ansprüche, **dadurch gekennzeichnet, dass** der Festigkeitsträger ausgewählt ist aus Glas, Keramik, Bor, Kohle, Basalt, synthetischen und/oder natürlichen Polymeren.

10. Verwendung eines beschichteten Festigkeitsträgers nach zumindest einem der vorhergehenden Ansprüche für die Herstellung von Produkten für industrielle Anwendungen, zur Herstellung von Rotorblättern für Windkraftanlagen, in der Luft- und Fahrzeugtechnik, im Automobilbau, für Sportartikel und im Bootsbau.

11. Verfahren zur Herstellung eines faserverstärkten Produktes folgende Schritte enthaltend:
a) Herstellung eines beschichteten Festigkeitsträgers nach zumindest einem der Ansprüche 1 bis 8 und gegebenenfalls Vorformung in einer oder mehreren Schichten des beschichteten Festigkeitsträgers
b) Kontaktieren des beschichteten Festigkeitsträgers mit einem bei Verarbeitungstemperaturen flüssigen Harzes und
c) Aushärtung des Verbundes bei gegebenenfalls erhöhter Temperatur unter Druck oder Vakuum.

12. Verfahren nach Anspruch 10, **dadurch gekennzeichnet, dass** die Herstellung des faserverstärkten Produktes im Resin-Transfer-Molding (RTM) Verfahren erfolgt.

13. Verfahren nach Anspruch 10, **dadurch gekennzeichnet, dass** die Herstellung des faserverstärkten Produktes im Vakuuminfusionsverfahren erfolgt.

14. Verfahren nach zumindest einem der Ansprüche 10 bis 12, **dadurch gekennzeichnet, dass** das flüssige Harz ausgewählt ist aus Epoxidharzen, Phenoxyharzen, Vinylesterharzen, Polyesterharzen, Cyanatesterharzen, Bismaleiimdharzen, Benzoxazinharzen und/oder Mischungen hieraus.

## Claims

1. A reinforcement whose surface has a coating of a composition, **characterized in that** the composition is composed of a solid resin and carbon nanotubes and this composition has been subjected to a heat treatment above the melting temperature or the softening range and below the crosslinking temperature of the optionally self-crosslinking solid resin, as a result of which the composition is fixed on the surface of the reinforcement.

2. A reinforcement whose surface has a coating of a composition, **characterized in that** the composition comprises a solid resin having a Tₘ or T_{g} > 50°C, carbon nanotubes, and further additives and this composition has been subjected to a heat treatment above the melting temperature or the softening range of the solid resin and below the crosslinking temperature of the optionally crosslinking composition, the composition being fixed on the surface of the reinforcement.

3. The reinforcement of claim 1 or 2, **characterized in that** the solid resin is selected from epoxy resins, phenoxy resins, vinyl ester resins, polyester resins, cyanate ester resins, bismaleimide resins, benzoxazine resins and/or mixtures hereof.

4. The reinforcement of claim 3, **characterized in that** the composition comprises at least one resin selected from the group consisting of polyepoxides on the basis of bisphenol A and/or F and advancement resins prepared therefrom, on the basis of epoxidized halogenated bisphenols and/or epoxidized novolaks and/or polyepoxide esters on the basis of phthalic acid, hexahydrophthalic acid or on the basis of terephthalic acid, epoxidized o- or p-aminophenols, epoxidized polyaddition products of dicyclopentadiene and phenol.

5. The reinforcement of at least one of the preceding claims, **characterized in that** the carbon nanotubes are present in a concentration of 0.2% to 30% by weight, based on the solid resin, in the composition.

6. The reinforcement of claim 2, **characterized in that** the composition comprises, as further additives, graphite powders, siloxanes, pigments, metals or metal oxides, reactive diluents, processing assistants and/or UV protectants.

7. The reinforcement of claim 2, **characterized in that** the composition comprises, as further additive, a crosslinking agent.

8. The reinforcement of at least one of the preceding claims, **characterized in that** the reinforcement is selected from fibers, scrims, nonwovens, knits, random-laid fiber mats and/or wovens.

9. The reinforcement of at least one of the preceding claims, **characterized in that** the reinforcement ins selected from glass, ceramic, boron, carbon, basalt, synthetic and/or natural polymers.

10. The use of a coated reinforcement of at least one of the preceding claims for producing products for industrial applications, for producing rotor blades for wind turbines, in aircraft and vehicle technology, in automobile construction, for sports articles, and in marine construction.

11. A method for producing a fiber-reinforced produce, comprising the following steps:
a) producing a coated reinforcement of at least one of clams 1 to 8 and optionally preforming in one or more layers of the coated reinforcement,
b) contracting the coated reinforcement with a resin which is liquid at processing temperatures, and
c) curing the assembly at optionally elevated temperature under increased or reduced pressure.

12. The method of claim 10, **characterized in that** the fiber-reinforced product is produced by the Resin Transfer Molding (RTM) process .

13. The method of claim 10, **characterized in that** the fiber-reinforced produce is produced by the vacuum infusion method.

14. The method of at least one of claims 10 to 12, **characterized in that** the liquid resin is selected from epoxy resins, phenoxy resins, vinyl ester resins, polyester resins, cyanate ester resins, bismaleimide resins, benzoxazine resins and/or mixtures hereof.

## Revendications

1. Une armature dont la surface présente un revêtement d'une composition, **caractérisée en ce que** la composition est constituée d'une résine solide et de nanotubes de carbone et cette composition a été soumisse à un traitement thermique au-dessus de la température de fusion ou de la plage de ramollissement et inférieure à la température de réticulation de l'éventuelle résine solide auto-réticulante, comme resultat par lequel la composition est fixée sur la surface de l'armature.

2. Une armature dont la surface présente un revêtement d'une composition, **caractérisée en ce que** la composition continent une rénine solide rayant une Tm ou Tg > 50°C, les nanotubes de carbone, et d'autres additifs et cette composition a été soumise à une traitement thermique au-dessus de la température de fusion ou de la plage de amollissement de la résigne solide et en dessous de la temperature de réticulation éventuellement de la composition de réticulante, dans laquelle la composition est fixée sur la surface de l'armature.

3. L'armature selon la revendication 1 ou 2, **caractérisé en ce que** la résine solide est choisie parmi les résines époxy, les résines phénoxy, les résines ester de vinyl, les résines polyesters, les résines d'ester de cyanate, résines bismaléimide, les résines benzoxazine et / ou des mélanges de ceux-ci.

4. L'armature selon la revendication 3, **caractérisé en ce que** la composition comprend au moins une résine choisie dans le groupe des polyépoxydes à base de bisphénol A et / ou F et des résines d'avancement dérivés à base de bisphénols halogènes époxydes et / ou époxydés novolaques et / ou des esters de polyépoxydes à base d'acide phtalique, l'acide hexahydrophtalique ou contient à base d'acide téréphtalique, o ou p-aminophénols époxydée, produit époxydé du produit de polyaddition de dicyclopentadiène et de phénol.

5. L'armature selon au moins l'une des revendications précédentes, **caractérisé en ce que** les nanotubes de carbone sont présents en une concentration de 0,2 à 30% en poids, sur la base de la résine solide, dans la composition.

6. L'armature selon la revendication 2, **caractérisé en ce que** la composition comprend comme autres additifs, de la poudre de graphite, des siloxanes, des pigments, des métaux ou des oxydes métalliques, des diluants réactifs, des adjuvants de transformation et / ou des protecteurs UV.

7. L'armature selon la revendication 2, **caractérisé en ce que** la composition comprend, comme autres additifs, un agent de réticulation.

8. L'armature selon au moins l'une des revendications précédentes, **caractérisé en ce que** l'armature est choisie parmi des fibres, des mousselines, des non-tissés, des tricots, des nattes de fibres enchevêtrées et / ou tissés.

9. L'armature selon au moins l'une des revendications précédentes, **caractérisé en ce que** l'armature est choisie parmi le verre, la céramique, le bore, le carbone, le basalte, synthétiques et / ou des polymères naturels.

10. Utilisation d'une armature revêtu selon au moins l'une de revendication précédentes pour la fabrication de produits pour des applications industrielles, pour la production de pales de rotor pour éoliennes, dans la technologie de l'aéronotique et de véhicules, automobiles, pour des articles de sport et de la constriction de bateaux.

11. Procédé de fabrication d'une armature, comprenant les étapes suivantes:
a) préparation d'une l'armature selon au moins l'une des revendications 1 à 8 et, le cas échéant un préformage dans une ou plusieurs couchers de l'armature revêtu,
b) mettre en contact l'armature revêtu avec une résine qui est liquide à la temperature de traitement, et
c) le durcissement de l'assemblage, le cas échéant à une température élevée sous pression élevée ou réduite.

12. Procédé selon la revendication 10, **caractérisé en ce que** la préparation de l'armature est produite par le transfert de résine (RTM).

13. procédé selon la revendication 10, **caractérisé en ce que** la préparation de l'armature est faite par le procédé d'infusion sous vide.

14. Procédé selon au moins l'une des revendications 10 à 12, **caractérisé en ce que** la résine liquide est choisie parmi les résines époxy, les résines phénoxy, les résines vinyl esters, les résines polyester, les résines d'ester de cyanate, les résins bismaléimide, les resins benzoxazine et / ou des mélanges de ceux-ci.
